Europäisches Patentamt

European Patent Office

Office européen des brevets

(11) Veröffentlichungsnummer: **0 504 583 A1**

# EUROPÄISCHE PATENTANMELDUNG

(21) Anmeldenummer: **92102292.7**

(51) Int. Cl.5: **G01P 13/04**

(22) Anmeldetag: **12.02.92**

(30) Priorität: **18.02.91 DE 4104902**

(43) Veröffentlichungstag der Anmeldung:
**23.09.92 Patentblatt 92/39**

(84) Benannte Vertragsstaaten:
**ES FR GB IT**

(71) Anmelder: **SWF Auto-Electric GmbH**
**Stuttgarter Strasse 119 Postfach 1763**
**W-7120 Bietigheim-Bissingen(DE)**

(72) Erfinder: **Freund, Ludwig**
**Eisenbahnstrasse 7**
**W-7120 Bietigheim-Bissingen(DE)**
Erfinder: **Mathes, Joachim**
**Sinsheimer Strasse 8**
**W-7100 Heilbronn-Böckingen(DE)**

(54) **Verfahren und Anordnung zur Erkennung einer Bewegungsrichtung, insbesondere einer Drehrichtung.**

(57) Die Erfindung betrifft ein Verfahren und eine Anordnung zur Erkennung einer Bewegungsrichtung, insbesondere einer Drehrichtung, unter Verwendung zweier um 90° phasenverschobener Signale, die aus zwei in Bewegungsrichtung versetzt zueinander angeordneten Empfängern (3,4) abgeleitet werden. Aufgabe der Erfindung ist es, die um 90° phasenverschobenen Signale zu erzeugen, ohne daß die Genauigkeit der Phasenverschiebung wesentlich von der Genauigkeit der mechanischen Positionierung der Empfänger abhängt.

Erfindungsgemäß wird die Aufgabe dadurch gelöst, daß zur Ermittlung der Bewegungsrichtung zwei um 90° phasenverschobene Sinussignale aus periodischen Ausgangssignalen der Empfänger gebildet werden, indem die Ausgangssignale addiert und subtrahiert werden. Das Summen- und das Differenzsignal werden in bekannter Weise digitalisiert und zur Feststellung der Bewegungsrichtung weiterverarbeitet.

Durch die Anwendung der Erfindung ist eine weniger genaue Fertigung und Montage des Sensors möglich.

Fig.1

Die Erfindung betrifft ein Verfahren und eine Anordnung zur Erkennung einer Bewegungsrichtung, insbesondere einer Drehrichtung, unter Verwendung zweier um 90° versetzter Signale, die aus zwei in Bewegungsrichtung versetzt Zueinander angeordneten Gebern abgeleitet werden.

Zur Drehrichtungserkennung werden im allgemeinen zwei möglichst exakt um 90° versetzte Rechtecksignale benötigt, die den Ausgang eines Flipflops der Reihenfolge nach im Verlauf einer Signalperiode setzen oder zurücksetzen. Man erhält so ein digitales Richtungssignal.

Es ist bekannt, die versetzten Rechtecksignale durch zwei getrennte Sensorelemente zu erzeugen, die räumlich so angeordnet sind, daß sich für das Signal eine Phasenverschiebung von 90° ergibt (z. b. DE-OS 36 04 396, EP-PS 0 232 009, EP 0 350 819). Diese Anordnung hat den Nachteil, daß die getrennt angeordneten Sensorelemente sehr genau zueinander positioniert sein müssen. Das erfordert sehr enge mechanische loleranzen bei der Herstellung und Montage des Sensors. Fehler in der Phasenlage der Gebersignale durch Fehler der abzufragenden Geometrie, z.B. laumelschlag, durch Montagefehler und durch Fertigungstoleranzen wirken sich unmittelbar auf das Ausgangssignal des Sensors aus. Bei höheren Anforderungen wird deshalb nach dem Einbau zusätzlich abgeglichen.

Aufgabe der Erfindung ist es, zwei um 90° phasenverschobene Signale zu erzeugen, ohne daß die Genauigkeit der Phasenverschiebung wesentlich von der Genauigkeit der mechanischen Positionierung der in Bewegungsrichtung versetzt angeordneten Sensoren abhängt, so daß eine genaue Fertigung und Montage des Sensors nicht erforderlich ist.

Erfindungsgemäß wird die Aufgabe dadurch gelöst, daß die um 90° versetzten Signale zur Erkennung der Bewegungsrichtung aus zwei periodischen Ausgangssignalen der Empfänger abgeleitet werden, indem die Ausgangssignale addiert und subtrahiert werden. Das Summen- und das Differenzsignal werden in bekannter Weise digitalisiert und zur Feststellung der Bewegungsrichtung weiterverarbeitet.

Es ist zweckmäßig, wenn bereits die periodischen Ausgangssignale der zwei Empfänger sinusförmig sind.

Bei einer Anordnung zur Durchführung des Verfahrens werden zwei in Bewegungsrichtung versetzt zueinander angeordneten Empfängern ein Addierer und ein Subtrahierer nachgeordnet, denen in bekannter Weise ein Schmitt-Trigger zur Digitalisierung und ein D-Flipflop zur Erzeugung eines digitalen Richtungssignals nachgeschaltet sind.

Der Vorteil der Anwendung der Erfindung besteht in der Einsparung präzisionsmechanischer Arbeitsgänge.

Die Erfindung soll in einem Ausführungsbeispiel erläutert werden.

Es zeigen:

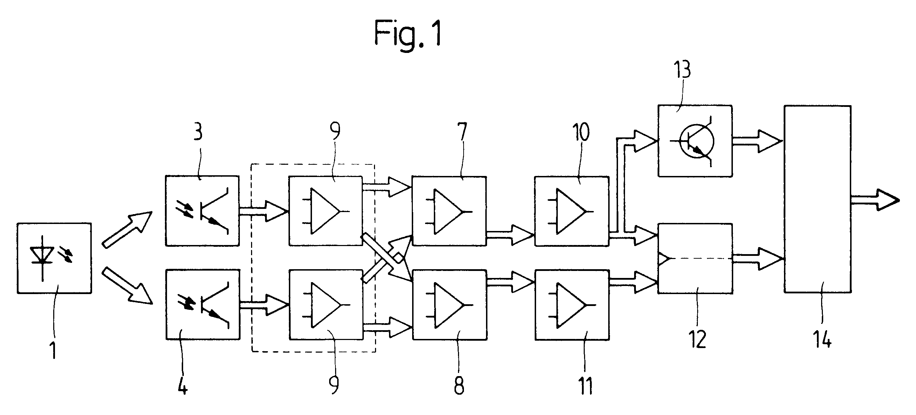

Figur 1    ein Blockschaltbiid zur Realisierung des erfindungsgemäßen Verfahrens,
Figur 2    die Zuordnung von Sender und Empfänger bei Erfassung der Drehrichtung,
Figur 3    den Signalverlauf in den unterschiedlichen Drehrichtungen.

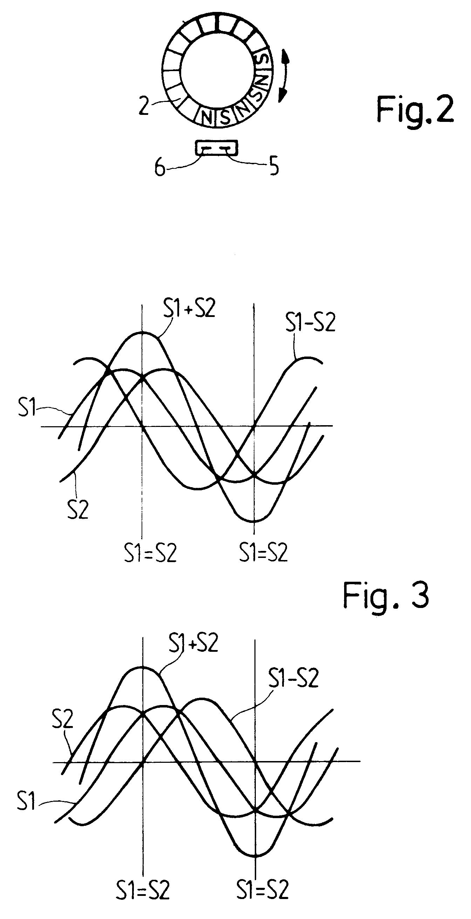

Von einer Signalquelle 1, die z.B. eine LED, oder, wie in Figur 2 dargestellt, ein rotierender Magnetring 2 sein kann, treffen Signale auf zwei Empfänger 3, 4, die z. B. Fototransistoren oder, wie in Figur 2, Hallelemente 5, 6, sein können. Die Hallelemente 5, 6 erzeugen die Signale S1 und S2 als periodische Signale, die bereits annähernd Sinusform und die gleiche Frequenz haben. Auch die Summe bzw. Differenz sind dann Sinuskurven. Die Signale S1 und S2 werden sowohl einem Addierer 7 als auch einem Subtrahierer 8, eventuell unter Zwischenschaltung eines Impedanzwandlers 9, zugeführt. Der Impedanzwandler dient der Entkopplung der Empfangssignale von der Auswertung. Unter der Voraussetzung, daß die Signale S1 und S2 gleich große Amplituden haben, gelten folgende Beziehungen:

Drehrichtung A des Magnetringes im Uhrzeigersinn nach Figur 2:

Signal des Empfängers 5 $= \sin x$
Signal des Empfängers 6 $= \sin(x - y)$; $y$ = Phasenverschiebung

<u>Summe:</u>

$$\sin x + \sin (x - y) =$$

$$= 2 \sin \frac{x + x - y}{2} \cos \frac{x - x + y}{2}$$

$$= 2 \cos \frac{y}{2} \sin (x - \frac{y}{2})$$

<u>Differenz:</u>

$$\sin x - \sin (x - y) =$$

$$= 2 \cos \frac{x + x - y}{2} \cdot \sin \frac{x - x + y}{2}$$

$$= 2 \sin \frac{y}{2} \cos (x - \frac{y}{2})$$

$$= 2 \sin \frac{y}{2} \sin (x - \frac{y}{2} + \frac{\pi}{2})$$

Drehrichtung B des Magnetringes entgegen dem Uhrzeigersinn nach Fig. 2:

Signal des Empfängers 5 $= \sin x$
Signal des Empfängers 6 $= \sin (x + y)$

<u>Summe</u>

$$\sin x + (x + y) =$$

$$= 2 \sin \frac{x + x + y}{2} \cos \frac{x - x - y}{2}$$

$$= 2 \cos (- \frac{y}{2}) \sin (x + \frac{y}{2})$$

$$= 2 \cos (\frac{y}{2}) \sin (x + \frac{y}{2})$$

Differenz:

$$\sin x - \sin (x + y) =$$

$$= 2 \cos \frac{x + x + y}{2} \sin \frac{x - x - y}{2}$$

$$= 2 \sin (- \frac{y}{2}) (\cos x + \frac{y}{2})$$

$$= - 2 \sin (\frac{y}{2}) \sin (x + \frac{y}{2} + \frac{\pi}{2})$$

$$= 2 \sin (\frac{y}{2}) \sin (\pi + x + \frac{y}{2} + \frac{\pi}{2})$$

$$= 2 \sin (\frac{y}{2}) \sin (x + \frac{y}{2} + \frac{3}{2} \pi)$$

$$= 2 \sin (\frac{y}{2}) \sin (x + \frac{y}{2} - \frac{\pi}{2})$$

Die Signale S1 + S2 und S1 - S2 weisen also je nach Drehrichtung einen Phasenversatz von $+\pi/2$ oder $-\pi/2$ auf. Eine Umkehr der Drehrichtung entspricht zeitlich einer Vertauschung der Signale S1 und S2. Die Güte der Sinusform des Summen- und Differenzsignals wird von der Qualität der Ausgangssignale der Empfänger bestimmt. Die Genauigkeit des Phasenversatzes hängt von der Amplitudendifferenz und der Größe der Phasenverschiebung der Ausgangssignale ab.

Es gilt also für alle Fälle, in denen der Polabstand ungleich dem Elementeabstand ist (bei Gleichheit wäre S1 - S2 immer Null), daß Summen- und Differenzsignai je nach Drehrichtung immer +90° oder -90° Phasenverschiebung aufweisen.

Die Summen- bzw. Differenzsignale werden in je einem Schmitt-Trigger 10, 11 digitalisiert und einem D-Flipflop 12 zur Richtungsbestimmung zugeführt. Dessen Ausgangssignal dient dann zusammen mit dem Ausgangssignal des Schmitt-Triggers des Additionszweiges unter Zwischenschaltung einer Ausgangsstufe 13 als Eingangssignal für einen Vorwärts-Rückwärtszähler 14, dessen Zählerstand zusammen mit den Vorzeichen die Größe des Winkels, um den der Magnetring 2 gedreht worden ist, und die Drehrichtung angibt.

Die erfindungsgemäße Lösung ermöglicht es, denselben Sensor für unterschiedliche Geometrie zu verwenden. Weiterhin werden Fehler der abzutastenden Geometrie (z.B. Taumelschlag) weitgehend kompensiert.

Da der 90°-Phasenversatz nicht mehr durch die geometrische Zuordnung der Empänger erzielt wird, können diese in geringem Abstand voneinander angeordnet werden, so daß eine Integration der beiden Empfängerelemente zusammen mit der Auswerteelektronik auf einem Siliziumchip oder Hybrid-Schaltkreis möglich wird.

Das erfindungsgemäße Verfahren und die erfindungsgemäße Anordnung sind vor allem zur Verwendung in Verbindung mit einer elektrisch angetriebenen Servolenkung sowie einer Dämpfer- und Fahrwerksregelung in einem Kraftfahrzeug vorgesehen.

**Patentansprüche**

1. Verfahren zur Erkennung einer Bewegungsrichtung, insbesondere einer Drehrichtung, unter Verwendung zweier um 90° phasenverschobener Signale, die aus zwei in Bewegungsrichtung einer Signalquelle versetzt angeordneten Empfängern abgeleitet werden, dadurch gekennzeichnet, daß zur Ermittlung der Bewegungsrichtung zwei um 90° phasenverschobene Signale aus periodischen Ausgangssignalen der Empfänger gebildet werden, indem die Ausgangssignale addiert und subtrahiert werden.

2. Verfahren nach Anspruch 1, dadurch gekennzeichnet, daß Summen- und Differenzsignal in bekannter Weise digitalisiert und zur Feststellung der Bewegungsrichtung weiterverarbeitet werden.

3. Verfahren nach Anspruch 1 oder 2, dadurch gekennzeichnet, daß die periodischen Signale eine beliebige Form haben und vor der Addition bzw. Subtraktion in sinusförmige Signale umgewandelt werden.

4. Verfahren nach Anspruch 1 oder 2, dadurch gekennzeichnet, daß die periodischen Signale wenigstens annähernd sinusförmige Signale sind.

5. Anordnung zur Durchführung des Verfahrens nach einem der Ansprüche 1 bis 4 unter Verwendung zweier in Bewegungsrichtung einer Signalquelle (2) versetzt zueinander angeordneter Empfänger (5, 6), dadurch gekennzeichnet, daß den Empfängern (5, 6) ein Addierer (7) und ein Subtrahierer (8) nachgeordnet sind und daß der Phasenversatz zwischen dem Ausgangssignal des Addierers (7) und dem des Subtrahierers (8) zur Bewegungsrichtungerkennung dienen.

6. Anordnung nach Anspruch 5, dadurch gekennzeichnet, daß sowohl dem Addierer (7) als auch dem Subtrahierer (8) jeweils ein Schmitt-Trigger (10, 11) nachgeordnet ist und daß der Ausgang jedes Schmitt-Triggers (10, 11) auf einen D-Flipflop (12) gegeben wird, dessen Ausgangssignal durch die Drehrichtung bestimmt ist.

7. Anordnung nach Anspruch 5 oder 6, dadurch gekennzeichnet, daß die Empfänger (3, 4) in einen einzigen Halbleiterchip oder Hybrid integriert sind.

8. Anordnung nach Anspruch 7, dadurch gekennzeichnet, daß auch zumindest Teile der Auswerteelektronik in den Halbleiterchip oder Hybrid integriert sind.

Fig. 1

EP 0 504 583 A1

Fig.2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PATENT ABSTRACTS OF JAPAN vol. 10, no. 364 (P-524)5. Dezember 1986 & JP-A-61 160 011 ( FANUC ) 19. Juli 1986 | 1,4,5 | G01P13/04 |
| Y | * Zusammenfassung * --- | 6 | |
| A | DE-A-3 513 343 (MAUSER) * Spalte 2, Zeile 24 - Zeile 50 * --- | 1 | |
| Y | FUNKSCHAU Bd. 50, Nr. 21, 1978, MÜNCHEN, DE Seiten 128 - 129; K.MORAW: 'Automatische Drehrichtungserkennung' * Abbildung 1 * --- | 6 | |
| A | DE-A-2 607 993 (LICENTIA PATENT- VERWALTUNG) * Anspruch 1 * ----- | 6 | |
| | | | **RECHERCHIERTE SACHGEBIETE (Int. Cl.5 )** |
| | | | G01P B62D |

Der vorliegende Recherchenbericht wurde für alle Patentansprüche erstellt

| Recherchenort | Abschlußdatum der Recherche | Prüfer |
|---|---|---|
| BERLIN | 16 JUNI 1992 | BROYDE M. |